Europäisches Patentamt

European Patent Office

Office européen des brevets

(19)

(11) Veröffentlichungsnummer: **0 089 536**
**A2**

(12) **EUROPÄISCHE PATENTANMELDUNG**

(21) Anmeldenummer: 83102191.0

(22) Anmeldetag: 05.03.83

(51) Int. Cl.³: **C 02 F 1/72**
**C 02 F 1/24**

(30) Priorität: 18.03.82 DE 3209856

(43) Veröffentlichungstag der Anmeldung:
28.09.83 Patentblatt 83/39

(84) Benannte Vertragsstaaten:
AT BE DE FR GB IT LU NL SE

(71) Anmelder: Rheinische Braunkohlenwerke AG.
Stüttgenweg 2
D-5000 Köln 41(DE)

(72) Erfinder: Velling, Günther, Dr.rer.nat.
Rheinstrasse 236
D-5303 Bornheim/Hersel(DE)

(72) Erfinder: Brüngel, Norbert, Dr.
Guldenbachstrasse 2
D-5000 Köln 41(DE)

(74) Vertreter: Koepsell, Helmut, Dipl.-Ing.
Mittelstrasse 7
D-5000 Köln 1(DE)

(54) Verfahren zur Oxidation von Schwefelwasserstoff, der im Abwasser von Kohlevergasungsanlagen gelöst ist.

(57) Der im Abwasser von Kohlevergasungsanlagen enthaltene Schwefelwasserstoff wird in Gegenwart des aus dem Produktgas ausgewaschenen feinstkörnige Restkokses, der im Abwasser suspendiert ist, oxidierend behandelt. Die Restkokspartikel dienen dabei als Katalysator. Bei Verwendung von Luft ist bei üblicher Behandlungsdauer eine nahezu quantitative Umsetzung des Schwefelwasserstoffes zu Sulfat erreichbar. Falls die Feststoffpartikel durch Flotation aus dem Abwasser entfernt werden, können Flotation und oxidierende Behandlung zur Umsetzung des Schwefelwasserstoffes gleichzeitig in einer gemeinsamen Einrichtung durchgeführt werden.

EP 0 089 536 A2

./...

DIPL.-ING. HELMUT KOEPSELL
PATENTANWALT

0089536
5 KÖLN 1 21.2.1983
Mittelstrasse 7
Telefon (02 21) 21 94 23
Telegrammadresse: Koepsellpatent Köln

-1-

Rheinische Braunkohlenwerke AG.

Ri/110

Reg.-Nr. bitte angeben

## Verfahren zur Oxidation von Schwefelwasserstoff, der im Abwasser von Kohlevergasungsanlagen gelöst ist

Die Erfindung betrifft ein Verfahren zur Oxidation von Schwefelwasserstoff, der in feinkörnige, kohlenstoffhaltige Feststoffteilchen enthaltendem Abwasesr von Kohlevergasungsanlagen gelöst ist.

Bei der Vergasung, insbesondere der hydrierenden Vergasung von kohlenstoffhaltigem Feststoff wird ein Teil des festen, kohlenstoffhaltigen Rückstandes, der sogenanne Restkoks, mit dem Produktgas aus dem Reaktor ausgetragen. Der wesentliche Teil dieses Feststoffes wird trocken in Zyklonen aus dem Produktgas entfernt. Es verbleibt jedoch immer noch ein gewisser Anteil von sehr feinkörnigem Fefststoff mit einer Korngröße von 0 - 0,5 mm, überwiegend 0 - 0,2 m, im Produktgas, der unter Verwendung von Wasser ausgewaschen wird. Dabei ist es unvermeidbar, daß ein Teil des im Produktgas enthaltenen Schwefelwasserstoffe im Waschwasser gelöst wird, so daß die resultierende Trübe, also das Waschwasser mit den darin suspendierten Feststoffteilchen, neben anderen Verbindungen, insbesondere $NH_3$, Phenolen und Kohlenwasserstoff, auch Schwefelwasserstoff enthält.

Die Gaswäsche erfolgt normalerweise unter dem Überdruck, unter dem das gesamte Vergasungssystem steht. Dieser kann bis zu 120 bar und mehr betragen. Dies hat zur Folge, daß die Trübe nach Verlassen des Überdrucksystems eine Entspannung erfährt, wobei zwangsläufig auch ein Teil des darin

. . .

gelösten Schwefelwasserstoffes wieder in die gasförmige Phase übergeht und aus der Trübe abgeschieden wird. Es verbleibt jedoch in jedem Fall ein Restgehalt an Schwefelwasserstoff, der entfernt werden muß, bevor das Abwasser einer biologischen Aufarbeitungseinrichtung, einer Kanalisation oder einem Vorfluter zugeleitet werden kann. Dazu genügt es, die im Abwasser befindlichen Sulfide zu oxidieren, da die Oxidationsstufen des Sulfides bei den in Frage kommenden relativen Mengen nicht als störend bei der biologischen Aufarbeitung bzw. bei der Einleitung in Kanalisation oder Vorfluter angesehen werden.

Die DE-OS 23 34 994 offenbart zwar bereits ein Verfahren zur Oxidation sulfidhaltigen Abwassers, wobei es unter anderem auch darum geht, $H_2S$ in Sulfate umzuwandeln. Dabei werden jedoch ein Überdruck von 5 - 56 bar und die Verwendung eines Übergangsmetallkatalysators vorausgesetzt. Die Anwendung von Überdruck nach einem nicht unerheblichen apparativen Aufwand ist erforderich. Der Übergangsmetallkatalysator verursacht zusätzliche Betriebskosten. Die DE-OS 26 54 937 offenbart ein Verfahren zur Entfernung von Phenolen und anderen organischen Stoffen aus Abwasser, auch solchen aus Vergasungsanlagen, bei welchen das Kohlefeingut, das vom Produktgas aus einer Fließbettvergaseranlage ausgetragen wird, als Adsorptionsmittel verwendet wird. In der Vorveröffentlichung wird auch das Entfernen von Schwefelwasserstoff erwähnt. Dies geschieht jedoch mittels Strippen, also auf physikalische Weise.

Auch die DE-OS 27 40 768 offenbart ein Verfahren zum Behandeln von Abwasser, bei welchem die Kohle ebenfalls als Adsorptionsmittel verwendet wird. Im Zusammenhang mit dem Vorhandensein von Schwefelverbindungen soll ein Sauerstoff enthaltendes Gas in das Abwasser eingeführt werden. Dies geschieht jedoch dazu, das Entstehen von Aerobenmikroorga-

...

nismen zu verhindern, die ihrerseits Schwefelwasserstoff bilden können. Mithin setzt diese Vorveröffentlichung voraus, daß ggf. zu entfernende Schwefelverbindungen nicht in Form von Schwefelwasserstoff vorliegen, so daß es auch nicht darum gehen kann, Schwefelwasserstoff durch Oxidation in eine für die Umwelt unschädliche Form umzuwandeln.

Die DE-OS 23 41 228 offenbart ein Verfahren zur Entgiftung von cyanidhaltigen Abwässern. Dazu wird eine Suspension von Asche in Wasser verwendet, die durch Auswaschen der Aschepartikel aus dem Produktgas eines Vergasers anfällt. Die Möglichkeit, daß diese Flugasche noch C-Bestandteile enthält, wird nicht erwähnt. Dies ist jedoch in dem hier interessierenden Zusammenhang ohnehin ohne Belang, da in dieser Vorveröffentlichung vorgeschlagen wird, den Schwefelwasserstoff durch chemische Reaktion des letzeren mit der Asche auszuscheiden. Letztere wird somit als Reaktionsmittel verwendet. Eine Oxidation des Schwefelwasserstoffes ist nicht vorgesehen.

Der Erfindung liegt die Aufgabe zugrunde, ein Verfahren der einleitend beschriebenen Art auf möglichst einfache Weise durchzuführen, so daß der apparative Aufwand und auch der Aufwand an Betriebsmitteln gering bleiben. Trotzdem soll eine weigehend quantitative Umsetzung des Schwefelwasserstoffes mit Luftsauerstoff, vorzugsweise unter Sulfatbildung, erreicht werden.

Zur Lösung dieser Aufgabe schlägt die Erfindung vor, daß die Behandlung des Abwassers zur Oxidation des darin gelösten Schwefelwasserstoffes in Gegenwart der feinverteilten kohlenstoffhaltigen Feststoffpartikel durchgeführt wird. Dabei wird der im Abwasser suspendierte Restkoks als Katalysator mit dem Ergebnis einer starken Beschleunigung der Umsetzung, so daß innerhalb in der Praxis ohne weiteres

...

realisierbarer Zeiten eine fast quantitative Oxidation erreicht wird, und zwar sogar bei einem relativ geringen Luftüberschuß.

Die quantitative Einstellung des kohlenstoffhaltigen Feststoffes im Abwasser zur Erzielung einer möglichst quantitativen Umsetzung in kurzer Zeit kann dadurch erfolgen, daß wenigstens ein Teil des unbehandelten Abwassers zwecks Anreicherung mit kohlenstoffhaltigen Feststoffteilchen im Kreislauf, also mehrrmals durch die Einrichtung geführt wird, in welcher die Feststoffteilchen aus dem Produktgas ausgewaschen werden. Dabei wird zwar auch zusätzlichlicher Schwefelwasserstoff im Abwasser gelöst. Gleichzeitig hat aber das Hindurchströmen des Gases durch das Waschwasser zur Folge, daß ein Teil des bereits in letztere gelösten Schwefelwasserstoffes wieder gestrippt, also entfernt wird, so daß im Ergebnis keine starke Anreicherung mit Schwefelwasserstoff stattfindet. Selbst diese Anreicherung ist jedoch ohne große Bedeutung, weil zumindest dann, wenn das Abwasser nach der Wäsche und vor der oxidierenden Behandlung entspannt wird, also eine Verminderung der Druckbelastung erfährt, ein großer Teil des gelösten Schwefelwasserstoffes wieder in die gasförmige Phase übergeht, so daß er aus der Abluft entfernt werden muß. Dies ist jedoch im allgemeinen weniger problematisch als das Unschädlichmachen des im Wasser gelöst bleibenden Schwefelwasserstoffes.

Ein wesentlicher Vorteil der Erfindung besteht darin, daß die angestrebte nahezu quantitative Umsetzung des Schwefelwasserstoffes auch dann erreicht werden kann, wenn die oxidierende Behandlung des Abwassers unter atmosphärischem Druck durchgeführt wird. Die Temperaturen des Abwassers liegen dabei im Bereich von 50 - 100° C, wobei auch hierfür

...

keine zusätzlichen Aufwendungen erforderlich sind, da das Abwasser in der Gaswäsche durch das zu reinigende Produktgas entsprechend erwärmt wird.

Der pH-Wert des Abwassers muß im alkalischen Bereich liegen, vorzugsweise bei 9 oder darüber. Eine besondere Einstellung des pH-Wertes durch Zugabe von Alkalien ist im allgemeinen nicht erforderlich, da beim Waschvorgang aus dem Produktgas $NH_3$ mit ausgewaschen wird, wodurch im Normalfall immer ein pH-Wert im alkalischen Bereich gewährleistet ist. Allerdings können dem Abwasser, falls erforderlich, vor der oxidierenden Behandlung auch alkalische Substanzen hinzugefügt werden.

Die Erfindung sieht weiterhin die Möglichkeit vor, ggf. zusätzlich zu den vom Abwasser aus dem Prozessgas ausgewaschenen kohlenstoffhaltigen Feststoffpartikeln noch weiteres feinköriges kohlenstoffhaltiges festes Gut in das Abwasser zu geben. Dazu kann das in den Zyklonen aus dem Produktgas ausgeschiedene feinkörnige Material verwendet werden. Das Eingeben von zusätzlichem Restkoks in das Abwaser wird bei normalem Betrieb der Vergasungsanlage und der Oxidationseinrichtung nicht erforderlich sein, da, wie gesagt, durch ensprechende Rückführung des Abwassers ohne weiteres die Möglichkeit besteht, den Gehalt von kohlenstoffhaltigen Feststoffteilchen einzustellen, der für die gewünschte Katalysatorwirkung erforderlich ist. Im allgemeinen reicht ein Restkoksgehalt von 1 g/l Abwasser aus, um den gewünschten Effekt eintreten zu lassen. Es kann jedoch nicht ausgeschlossen werden, daß während bestimmter Betriebsphasen, beispielsweise beim Anfahren der Anlage, nicht genug oder nicht ausreichend oberflächenaktive kohlenstoffhaltige Partikel im Abwasser vorhanden sind. In solchen Fällen kann die Zugabe zusätzlichen Restkokses erforderlich oder doch zumindest zweckmäßig sein. Im übrigen schließt

...

natürlich die Erfindung nicht die Möglichkeit aus, daß die suspendierten kohlenstoffhaltigen Feststoffteilchen zugleich auch als Adsorbens für andere im Abwasser vorhandene unerwünschte Verbindungen dienen. In Abhängigkeit von der Menge derartiger Verbindungen kann der Fall eintreten, daß die Menge an in der Wäsche ausgewaschenen Feststoffteilchen für diesen Zweck nicht ausreicht. Es kann auch der Fall eintreten, daß aufgrund der eintretenden Adsorption solcher anderen Verbindungen durch die Restkokspartikel deren Katalysatorwirkung beeinträchtigt wird, so daß auch aus diesem Grunde die Zugabe zusätzlichen Restkokses erforderlich sein kann. Auch hier gilt jedoch, daß durch Kreislaufführung des Wassers die für die jeweiligen Gegebenheiten notwendigen Mengen an Restkokspartikel im zu behandelnden Abwasser eingestellt werden können.

Das Verfahren gemäß der Erfindung zeichnet sich durch Einfachheit und große Wirtschaftlichkeit aus, da als Katalysator ein Material verwendet wird, welches ohnehin im Abwasser enthalten ist und, da es mit letzterem immer frisch zugeführt wird, auch immer seine bestmögliche Wirkung zeigt.

Eine besonders voreilhafte Verfahrensführung ist dann möglich, wenn die kohlenstoffhaltigen Feststoffpartikel durch Flotation aus dem Abwasser entfernt werden. In diesem Fall kann die Oxidation zumindest eines Teils des im Wasser gelösten Schwefelwasserstoffes durch ds sauerstoffhaltie Gas, im allgemeinen Luft, erfolgen, welches für die Flotation in das Abwasser eingeführt wird. Dabei kann ggf. die sonst notwendige besondere Einrichtung für das Zuführen des Sauerstoffes gespart werwden, zumal in der Flotationseinrichtung ohnehin eine sehr feine Verteilung des sauerstoffhaltigen Gasgemisches erforderlich ist.

...

Verfahren, bei welchen $H_2$ mit Luft in der Gasphase umgesetzt wird, insbesondere auch in Gegenwart von Katalysatoren wie Bauxit, Eisenoxid und Aktivkohlen, sind im allgemeinen bekannt. Einige dieser Verfahren werden technisch zur Schwefelerzeugung oder zur Gasreinigung verwendet. Die Ergebnisse der Oxidation in wässriger Phase hingegen werden als unbefriedigend angesehen.

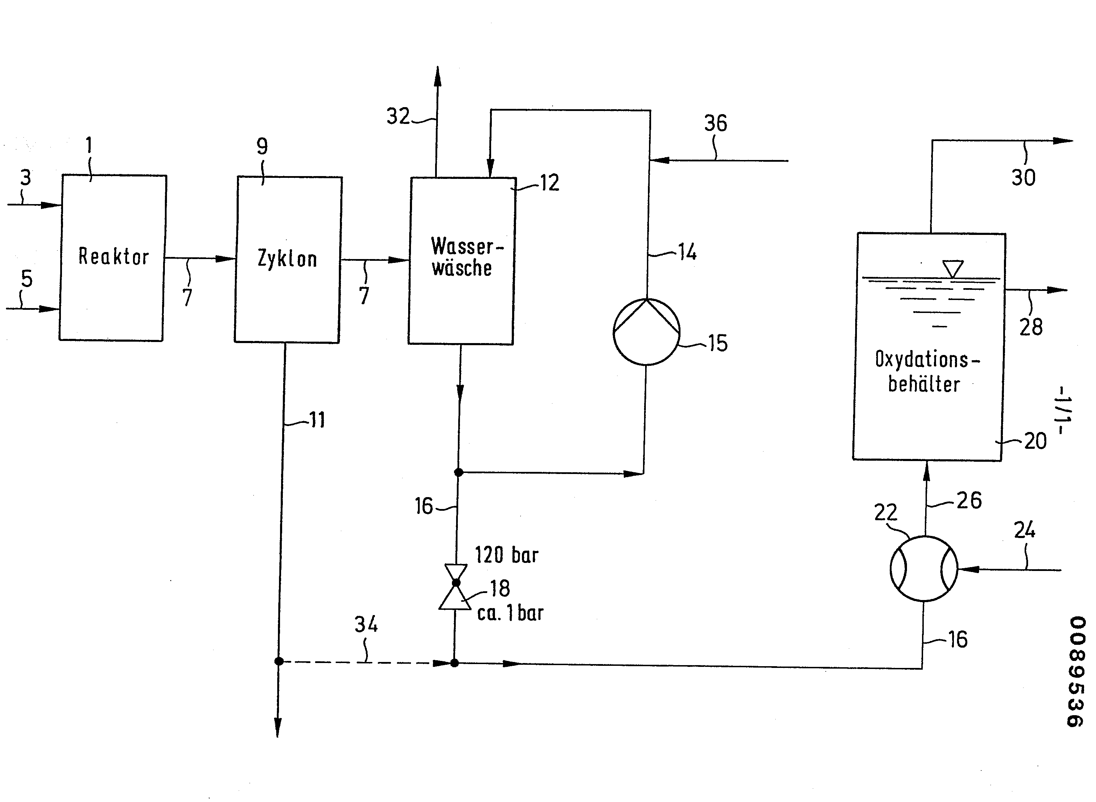

In der Zeichnung wird ein Ausführungsbeispiel der Erfindung anhand eines Fließbildes beschrieben, welches sich auf eine Anlage zur hydrierenden Vergasung von Kohle bezieht.

In einen Reaktor 1 werden kohlenstoffhaltiges Material 3 und ein wasserstoffhaltiges Vergasungsmittel 5 gegeben. Der Reaktor wird im allgemeinen als Wirbelbettreaktor ausgebildet sein. Das im Reaktor entstehende Produktgas 7 wird in einem Zyklon 9 vom gröberen Staub befreit. Der dort abgetrennte Staub 11 wird aus dem Zyklon 9 herausgeführt. Das vom groben Staub befreite Produktgas 7 gelangt nunmehr in eine Wascheinrichtung 12, in welcher der im Produktgas verbliebene Feinstaub durch Waschen mit Wasser entfernt wird. Das Waschwasser wird in einer Leitung 14 im Kreislauf geführt, in welchem sich eine Pumpe 15 befindet. Ein Teilstrom des Waschwassers wird über eine Leitung 16, in welcher ein Druckminderventil 18 eingeschaltet ist, in einen Oxidationsbehälter 20 geführt, bei welchem es sich um eine Flotationszelle handeln kann. In die Leitung 16 ist eine Wasser-Luft-Mischeinrichtung 22 eingeschaltet, die mit einer Leitung 24 für die Zuführung von Luft verbunden ist. Durch die Leitung 26 tritt ein Abwasser-Luft-Gemisch in den Oxidationsbehälter 20 ein, in welchem der im Abwasser befindliche Schwefelwasserstoff in Gegenwart des in der Wasserwäsche 12 ausgewaschenen feinstkörnigen Restkokses oxidiert wird. Das $H_2$S-freie Wasser wird über eine Leitung 28 weitergeleitet, ggf. zu einer Einrichtung zur Entfernung

...

des in Wasser suspendierten kohlenstoffhaltigen Feststoffes, falls die Feststoffpartikel nicht auch im Oxidationsbehälter aus dem Abwasser entfernt worden waren. Durch die Leitung 30 wird die Abluft abgeleitet.

Das vom Feststoff praktisch vollständig gereinigte und auch abgekühlte Produktgas wird durch eine von der Wascheinrichtung 12 abgehende Leitung der weiteren Verwendung zugeführt.

Von der Leitung 11 für den im Zyklon 9 aus dem Produktgas abgeschiedenen groben Staub kann eine Leitung 34 abzweigen, durch die im Bedarfsfall Zyklon-Staub in die Leitung 16 und das darin befindliche, zum Oxidationsbehälter 20 fliessende Wasser eingegeben wird, falls dies bei bestimmten Betriebszuständen notwendig sein sollte. Im übrigen kann die Anordnung ohne weiteres so getroffen sein, daß Abwasser aus dem Kreislauf 14 nur dann durch die Leitung 16 zum Oxidationsbehälter 20 gegeben wird, wenn das Abwasser eine Mindestmenge an suspendiertem feinstkörnigen Restkoks enthält.

Durch die Leitung 36 wird entsprechend der durch die Leitung 16 abgeleiteten Abwassermenge Frischwasser zugeführt.

Der durch die Erfindung erzielbare Effekt ergibt sich aus der folgenden Tabelle, die das Ergebnis von Versuchen wiedergibt, bei denen das Abwasser einer Anlage zur hydrierenden Vergasung von Kohle unter Anwendung der Lehre gemäß der Erfindung oxidiert wurde.

...

|                                           |       | Versuch 1 | Versuch 2 | Versuch 3 |
|-------------------------------------------|-------|-----------|-----------|-----------|
| 1. $H_2S$ Eingang Oxidation              | mg/h  | 4 800     | 9 300     | 13 330    |
| 2. $H_2S$ Ausgang Oxidation              | mg/h  | quantitativ nicht mehr nachweisbar | 130 | 170 |
| 3. $H_2S$ in Abluft                      | mg/h  | 65        | 530       | 190       |
| 4. Differenz Zeile 1. und 2./3.           | mg/h  | 4 735     | 8 640     | 12 9.70   |
| 5. Umgesetztes $H_2S$                    | %     | 98,6      | 92,9      | 97,3      |
| 6. Rest-$H_2S$, das mit Abluft abgeführt wird | % | 1,4   | 5,7       | 1,4       |

Die Summe der Werte der Zeilen 5. und 6. muss nicht unbedingt 100 ergeben, da kleinere $H_2S$-Mengen im Abwasser verblieben sein können.

Patentansprüche:

1. Verfahren zur Oxidation von Schwefelwasserstoff, der in feinkörnige kohlenstoffhaltige Feststoffteilchen enthaltendem Abwasser von Kohlevergasungsanlagen gelöst ist, dadurch gekennzeichnet, daß die Behandlung des Abwassers zur Oxidation des darin gelösten Schwefelwasserstoffes in Gegenwart der feinverteilten kohlenstoffhaltigen Feststoffpartikel durchgeführt wird.

2. Verfahren nach Anspruch 1, dadurch gekennzeichnet, daß wenigstens ein Teil des unbehandelten Abwassers zwecks Anreicherung mit kohlenstoffhaltigen Feststoffteilchen im Kreislauf geführt wird.

3. Verfahren nach Anspruch 2, bei welchem die Kohlevergasung unter Überdruck durchgeführt wird, dadurch gekennzeichnet, daß die Kreislaufführung zumindest eines Teils des Abwassers in dem unter Überdruck stehenden Bereich der Vergasungsanlage durchgeführt wird.

4. Verfahren nach anspruch 3, dadurch gekennzeichnet, daß die oxidierende Behandlung des Abwassers unter atmosphärischem Druck durchgeführt wird.

5. Verfahren nach einem der vorhergehenden Ansprüche, dadurch gekennzeichnet, daß dem Abwasser vor der oxidierenden Behandlung zur Einstellung des pH-Wertes alkalische Substanzen zugefügt werden.

6. Verfahren nach einem der vorhergehenden Ansprüche, dadurch gekennzeichnet, daß zusätzlich zu den vom Abwasser aus dem Produktgas der Kohlevergasungsanlage ausgewaschenen

...

kohlenstoffhaltigen Feststoffpartikeln noch weiteres feinkörniges kohlenstofhaltiges festes Gut vor Durchführung der oxidierenden Behandlung in das Abwasser gegeben wird.

7. Verfahren nach einem der vorhergehenden Ansprüche, bei welchem die kohlenstoffhaltigen Feststoffpartikel durch Flotation aus dem Abwasser entfernt werden, dadurch gekennzeichnet, daß die Oxidation zumindest eines Teils des im Wasser gelösten Schwefelwasserstoffes durch das sauerstoffhaltige Gas erfolgt, welches für die Flotation in das Abwasser eingeführt wird.

8. Verfahren nach einem der vorhergehenden Ansprüche, dadurch gekennzeichnet, daß die Behandlung des Abwassers zur Oxidation des darin gelösten Schwefelwasserstoffes wenigstens 5 min. dauert.

...

Ri 110

0089536

-1/1-